# EUROPEAN PATENT APPLICATION

(11) **EP 1 990 979 A1**
(43) Date of publication of application: **12.11.2008**
(21) Application number: 07713868.3
(22) Date of filing: 06.02.2007
(51) Int. Cl.: H04M 1/00, H04M 1/60, H04Q 7/38

(54) **WIRELESS COMMUNICATION APPARATUS AND COMMUNICATION METHOD THEREOF**

(30) Priority: 28.02.2006 JP 2006053130
(71) Applicant: MATSUSHITA ELECTRIC INDUSTRIAL CO., LTD., Osaka 571-8501 (JP)
(72) Inventor: MACHII, Eiji, c/o Matsushita Industrial Co., Ltd., 2-1-61, Shiromi, Chuo-ku, Osaka 540-6207 (JP); TAKAHASHI, Hiroyuki, c/o Matsushita Industrial Co., Ltd., 2-1-61, Shiromi, Chuo-ku, Osaka 540-6207 (JP); UEDA, Shinichi, c/o Matsushita Industrial Co., Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/052039
(87) International publication number: WO 2007/099743

(57) **Abstract**

A problem of the present invention is to provide a wireless communication device capable of reducing power consumption and implementing a function of reporting the intensity of a received signal to an external device as well as to provide a communication method thereof. A portable cellular phone (1) has a portable cellular phone communication section (11) that establishes communication with a portable cellar phone base station (3) and a short-range wireless communication section (13) that establishes short-range communication with a hands-free device (2). A control section detects field intensity of the portable cellular phone communication section (11) and reports the detected intensity to the hands-free device (2), whereby the hands-free device (2) displays a communication state of the portable cellular phone (1) on a display section (23). A control section (12) of the portable cellular phone (1) acquires device information about an external device from the external device connected by way of a short-range wireless communication section (13); determines whether or not reporting of field intensity to the connected external device is necessary; and deactivates the function of reporting field intensity when the report is determined to be unnecessary.

## Description

### Technical Field

The present invention relates to a wireless communication device adapted to two different communication schemes and a communication method thereof.

### Background Art

Some portable cellular phones used for mobile communication have a second wireless communication function, such as short-range wireless communication, in addition to a mobile communication function and enable wireless communication with an external device by utilization of the second communication function. For instance, Patent Document 1 describes a communication system in which a portable cellular phone and a hands-free terminal capable of establishing hands-free voice communication are wirelessly connected together by Bluetooth (Registered Trademark) communication and which displays information about a call originator on the hands-free terminal when the portable cellular phone receives an incoming call.

The foregoing Bluetooth (Registered Trademark) communication includes a low power consumption mode, such as a Sniff mode, a Park mode, and a Hold mode, so that power consumed by a communication device can be suppressed (see; for instance, Patent Document 2).

Patent Document 1: JP-A-2005-210181
Patent Document 2: JP-A-2005-260586

### Disclosure of the Invention

### Problem that the Invention is to solve

As mentioned above, when the hands-free terminal has a display function, information displayed on the hands-free terminal includes information about the intensity of a received signal from a base station achieved in mobile communication of a portable cellular phone as well as information about a call originator received at the time of receipt of an incoming call. By these pieces of information, the user can ascertain a communication state of mobile communication of the portable cellular phone by checking a display on the hands-free terminal.

Incidentally, among external devices that are connectable through short-range wireless communication, one external device has the display function as mentioned above, and another external device has a headset not having the display function. However, in order for the portable cellular phone to perform foregoing operation conforming to the function of displaying the intensity of a received signal, the intensity of a received signal must be reported to the external device, regardless of the presence or absence of a display device in an external device, every time a change arises in the intensity of the received signal.

A change arises in the intensity of a signal received by a portable cellular phone from one moment to the next. Hence, even when communication established between the portable cellular phone and the external device is in a low power consumption mode, there is a necessity to temporarily cancel the low power consumption mode and reporting the intensity of the received signal. As mentioned above, even when the device connected by short-range wireless communication is not compatible with the display function, the intensity of a received signal is reported, which wastefully consumes power and results in an increase in electric power consumed by the portable cellular phone.

In the meantime, if report timing is decimated to curtail power consumption, a communication state of a portable cellular phone displayed on a device having a signal intensity display function may not match an actual state when the device is connected to the portable cellular phone,

The present invention has been conceived in view of the circumstance and aims at providing a wireless communication device capable of implementing a function of reporting the intensity of a received signal to an external device by curtailing power consumption and a communication method thereof.

### Means for Solving the Problem

First, the present invention provides a wireless communication device comprising:
a first wireless communication section;
a second wireless communication section that conducts wireless communication with an external device by use of a communication scheme differing from a communication scheme of the first wireless communication section;
a signal intensity detection section that detects intensity of a signal received by the first wireless communication section;
a signal intensity report section that reports information about the detected intensity of the received signal to the external device via the second wireless communication section;
a device information acquisition section that acquires device information about the external device from the external device connected by the second wireless communication section; and
a signal intensity report control section that determines, on the basis of the device information, whether or not it is necessary to report the information by the signal intensity report section and that, when reporting is determined to be unnecessary, deactivates a function of the signal intensity report section.

By the configuration, when the external device connected by the second wireless communication section is a device that does not require reporting of intensity of a received signal, the function of reporting intensity of a received signal is deactivated, so that power consumption of the wireless communication device can be suppressed.

Second, the present invention also relates to the previously-described first wireless communication device as the first, the wireless communication device further comprises:
a storage section that stores identification information about a device that does not require reporting of the information about the intensity of the received signal,
wherein the device information acquisition section acquires the identification information about the external device from the external device; and
wherein the signal intensity report control section deactivates the function of the signal intensity report section when the identification information stored in the storage section is coincident with the acquired identification information.

By the configuration, it is determined whether or not the external device connected by the second wireless communication section is a previously-designated device that does not require reporting of intensity of a received signal. Hence, the function of reporting intensity of a received signal to a device that does not require reporting of intensity of a received signal is reliably deactivated, so that power consumption of the wireless communication device can be suppressed.

Third, the present invention also relates to any one of the previously-described wireless communication devices of the first and the second inventions, wherein the device information acquisition section acquires, from the external device, function information on the external device, and
wherein the signal intensity report control section determines, depending on whether or not the acquired function information includes a predetermined function, whether or not it is necessary to report the information by the signal intensity report section.

By the configuration, it is estimated, on the basis of device information acquired from an external device, whether or not the external device has a function of displaying the intensity of a received signal, thereby determining whether or not reporting of intensity of a received signal is necessary. Hence, the function of reporting intensity of a received signal to a device that does not require reporting of intensity of a received signal is deactivated, so that power consumption of the wireless communication device can be suppressed.

Fourth, the present invention also relates to any one of the wireless communication devices of the first through the third inventions, wherein the device information acquisition section acquires information for commanding whether or not reporting of the intensity of the received signal is required from the external device; and wherein the signal intensity report control section determines, on the basis of the acquired command information, whether or not it is necessary to report the information by the signal intensity report section.

By the configuration, the external device directly commands that the intensity of a received signal should be reported. Hence, the function of reporting intensity of a received signal to a device that does not require reporting of intensity of a received signal is deactivated, so that power consumption of the wireless communication device can be suppressed.

Fifth, the present invention also relates to any one of the previously-described wireless communication devices of the first through the fourth inventions, wherein the signal intensity report section determines which one of a plurality of classified received signal intensity levels corresponds to the detected intensity of the received signal and, when it is determined that the received signal intensity level is changed, reports the determined level to the external device as the information about the detected intensity of the received signal.

By the configuration, a report is sent to the external device only when a change arises in the received signal intensity level, so that power consumption of the wireless communication device can be reduced.

Sixth, the present invention also relates to any one of the previously-descried wireless communication devices of the first through the fifth inventions, wherein the first wireless communication section is a mobile communication section which conducts communication with a base station for mobile communication, and wherein the second wireless communication section is a short-range wireless communication section which conducts short-range wireless communication with the external device.

By the configuration, the intensity of a signal received through mobile communication can be reported to an external device connected by short-range wireless communication.

Seventh, the present invention provides a wireless communication system including any one of the wireless communication device of the first through the sixth inventions and a short-range wireless communication device, as the external device, which conducts communication with the second wireless communication section of the wireless communication device.

By the configuration, when the external device connected by the second wireless communication section is a device that does not require reporting of intensity of a received signal, the function of reporting intensity of a received signal is deactivated, so that power consumption of the wireless communication device and the external device can be suppressed.

Eighth, the present invention provides a wireless communication method of a wireless communication device including a first wireless communication section, a second wireless communication section that conducts wireless communication with an external device by use of a communication scheme differing from a communication scheme of the first wireless communication section, a signal intensity detection section that detects intensity of a signal received by the first wireless communication section, and a signal intensity report section that reports information about the detected intensity of the received signal to the external device via the second wireless communication section, the wireless communication method comprising:
acquiring device information about the external device from the external device connected by the second wireless communication section; and
determining, on the basis of the device information, whether or not it is necessary to report the information by the signal intensity report section and deactivating a function of the signal intensity report section when the report is determined to be unnecessary.

By the method, when the external device connected by the second wireless communication section is a device that does not require reporting of intensity of a received signal, the function of reporting intensity of a received signal is deactivated, so that power consumption of the wireless communication device can be suppressed.

Ninth, the present invention also provides a program for causing a computer to implement the communication method of the eighth invention.

By the program, when the external device connected by the second wireless communication section is a device that does not require reporting of intensity of a received signal, the function of reporting intensity of a received signal is deactivated, so that power consumption of the wireless communication device can be suppressed.

### Advantage of the Invention

According to the present invention, there can be provided a wireless communication device capable of implementing a function of reporting the intensity of a received signal to an external device by curtailing power consumption and a communication method thereof.

### Brief Description of the Drawings

[Fig. 1] A block diagram showing the general configuration of a wireless communication system of a first embodiment of the present invention.
[Fig. 2] A block diagram showing the principal configuration of a portable cellular phone of the first embodiment of the present invention.
[Fig. 3] A sequence diagram for describing procedures of operation for establishing a link in the wireless communication system of the first embodiment of the present invention.
[Fig. 4] A flowchart showing processing procedures employed when the field intensity of the portable cellular phone of the first embodiment of the present invention is reported.
[Fig. 5] A sequence diagram for describing operation procedures employed for the case of field intensity report function of the wireless communication system of the first embodiment of the present invention.
[Fig. 6] A sequence diagram for describing operation procedures when the field intensity report function of the wireless communication system of the first embodiment of the present invention is deactivated.
[Fig. 7] A sequence diagram for describing procedures of link establishment operation in a wireless communication system of a second embodiment of the present invention.
[Fig. 8] A flowchart showing processing procedures employed when field intensity of the portable cellular phone of the second embodiment of the present invention is reported.

### Descriptions of the Reference Numerals

- 1: PORTABLE CELLULAR PHONE
- 2: HANDS-FREE DEVICE
- 3: PORTABLE CELLULAR PHONE BASE STATION
- 11: PORTABLE CELLULAR PHONE COMMUNICATION SECTION
- 12: CONTROL SECTION
- 13: SHORT-RANGE WIRELESS COMMUNICATION SECTION
- 21: SHORT-RANGE WIRELESS COMMUNICATION SECTION
- 22: FIELD INTENSITY ACQUISITION SECTION
- 23: DISPLAY SECTION
- 121: DEVICE INFORMATION ACQUISITION SECTION
- 122: STORAGE SECTION
- 123: MODE SETTING SECTION
- 124: FIELD INTENSITY REPORT DETERMINATION SECTION
- 125: FIELD INTENSITY DETERMINATION SECTION
- 126: FIELD INTENSITY REPORT SECTION

### Best Modes for Implementing the Invention

### (First Embodiment)

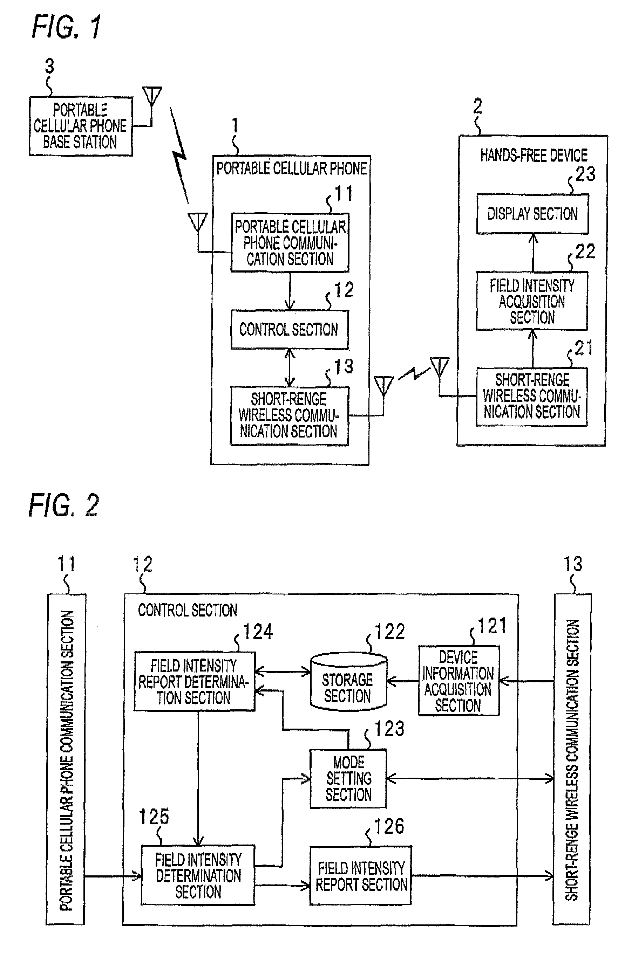

Fig. 1 is a block diagram showing the general configuration of a wireless communication system of a first embodiment of the present invention. As shown in Fig. 1, the wireless communication system of the present embodiment has a portable cellular phone 1 and a hands-free device 2 connected to the portable cellular phone 1 by way of short-range wireless communication. The portable cellular phone 1 is an example wireless communication device, and the hands-free device 2 is an example external device.

The portable cellular phone 1 includes a portable cellular phone communication section 11 connected to a mobile communication network by establishing communication with a portable cellular phone base station 3; a control section 12 for controlling the overall operation of the portable cellular phone 1; and a short-range wireless communication section 13 for establishing short-range wireless communication with the hands-free device 2. The portable cellular phone communication section 1 operates as a first example wireless communication section. The short-range wireless communication section 13 operates as an example second wireless communication section that establishes wireless communication with the external device through use of a communication scheme differing from a communication scheme of the first wireless communication section.

The hands-free device 2 has a short-range wireless communication section 21 for establishing short-range communication; a field intensity acquisition section 22; and a display section 23. The short-range wireless communication section 21 establishes communication with the short-range communication section 13 of the portable cellular phone 1. The field intensity acquisition section 22 acquires field intensity which is gained from the portable cellular phone 1 by way of the short-range wireless communication section 21 and which serves as example intensity of a received signal from the portable cellular phone base station 3 of the portable cellular phone 1. The display section 23 displays the information about the field intensity acquired by the field intensity acquisition section 22.

Fig. 2 is a block diagram showing the principal configuration of a portable cellular phone of the first embodiment of the present invention. As shown in Fig. 2, the control section 12 has a device information acquisition section 121; a storage section 122; a mode setting section 123; a field intensity report determination section 124; a field intensity determination section 125; and a field intensity report section 126. Fig. 2 primarily shows elements pertaining to a field intensity report function, and other elements for controlling the entirety of the portable cellular phone 1 are omitted.

The device information acquisition section 121 acquires device information about the hands-free device 2 from the information received from the hands-free device 2 connected by way of the short-range wireless communication section 13. The storage section 122 stores the device information acquired from the device information acquisition section 121. The mode setting section 123 sets either a normal communication mode or a power-saving mode in connection with the short-range wireless communication using the short-range wireless communication section 13.

The field intensity report determination section 124 acts as an example signal intensity report control section and determines a necessity of reporting field intensity to the hands-free device 2 in accordance with the device information stored in the storage section 122. The field intensity detection section 125 detects field intensity from a signal relieved by the portable cellular phone communication section 11, thereby determining a necessity of reporting field intensity ascribable to a change in field intensity, or the like. The field intensity report section 126 acts as an example signal intensity report section and reports information about the field intensity determined by the field intensity determination section 125 to the hands-free device 2 by way of the short-range wireless communication section 13.

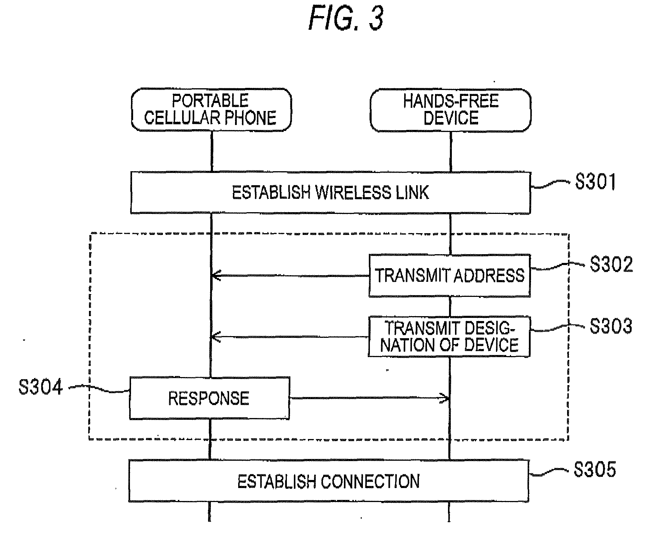

Fig. 3 is a sequence diagram for describing procedures of operation for establishing a link in the wireless communication system of the first embodiment of the present invention. As shown in Fig. 3, a wireless link is first established between the portable cellular phone 1 and the hands-free device 2 (step S301).

When the wireless link is established, the hands-free device 2 transmits to the portable cellular phone 1 a unique address assigned to the short-range wireless communication section 21; for instance, a BD address [a Bluetooth (Registered Trademark) device address] for the case of Bluetooth (Registered Trademark) (step S302). A device designation assigned to the hands-free device 2 is also transmitted to the portable cellular phone 1 (step S303). The device information acquisition section 121 of the portable cellular phone 1 acquires the reported address and the device designation as device information and stores the thus-acquired information in the storage section 122.

The portable cellular phone 1 receives device information that is an address, a device designation, and identification information about the device transmitted from the hands-free device 2 and transmits, when connection is allowed, a response that allows a connection to the hands-free device (step S304). Thus, communication between the portable cellular phone 1 and the hands-free device 2 is established (step S305).

As mentioned above, when establishing short-range wireless communication, the portable cellular phone 1 acquires identification information about a device that is to serve as a party of communication. The portable cellular phone 1 of the present embodiment determines a necessity of reporting field intensity by utilization of the thus-acquired device information.

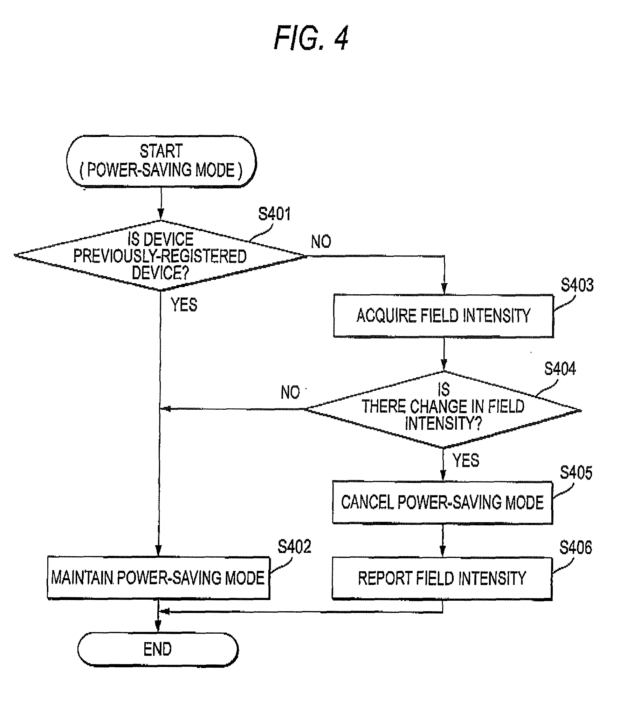

Fig. 4 is a flowchart showing processing procedures employed when the field intensity of the portable cellular phone of the first embodiment of the present invention is reported.

As shown in Fig. 4, upon receipt, from the mode setting section 123, of a report about entry of the power-saving mode, the field intensity report determination section 124 reads from the storage section 122 device information about the hands-free device 2 that is connected by way of the short-range wireless communication section 13 and that is in the power-saving mode, thereby determining whether or not the device requires reporting of field intensity (step S401).

Device information, such as identification information about a device that does not require reporting of field intensity, is previously registered in the storage section 122. In step S401, the field intensity report determination section 124 determines, by reference to the storage section 122, whether or not device information about an external device currently connected to the short-range wireless communication section 13 coincides with the device information about a device previously designated as a device that does not require reporting of field intensity, thereby determining whether or not the connected device requires reporting of field intensity.

When the device information about the external device currently connected to the short-range wireless communication section 13 coincides with the device information registered in the storage section 122 (YES in step S401), the device is determined as a device that does not require reporting of field intensity, and the power-saving mode is maintained (S402). Specifically, the field intensity reporting function is suspended.

In the meantime, when the device information about the external device currently connected to the short-range wireless communication section 13 does not coincide with the device information registered in the storage section 122 (NO in step S401), the field intensity report determination section 124 determines that field intensity needs to be reported to the connected device by short-range wireless communication. The field intensity determination section 125 acquires field intensity from the portable cellular phone communication section 11 in accordance with a command from the field intensity report determination section 124 (step S403).

The field intensity determination section 125 determines which one of a plurality of classified field intensity levels corresponds to the acquired field intensity. The essential requirement for the field intensity determination section 125 is to be able to determine at least the level of field intensity to be displayed on the hands-free device 2. For instance, when the hands-free device 2 displays five field intensity levels including an out-of-service level, the field intensity determination section 125 determines at least which one of the five levels corresponds to the detected field intensity.

The field intensity determination section 125 determines whether or not a change has arisen in the level corresponding to the detected filed intensity (step S404). When no change arises in the level of field intensity (step S404), the power-saving mode is maintained without reporting field intensity (step S402). In the meantime, when there is a change in the level of field intensity (step S405), the field intensity determination section 125 sends a report to the mode setting section 123, thereby canceling the power-saving mode of the short-range wireless communication section 13 with respect to the hands-free device 2 (step S405). The field intensity report section 126 reports a field intensity level acquired after occurrence of a change to the hands-free device 2 by way of the short-range wireless communication section 13 (step S406).

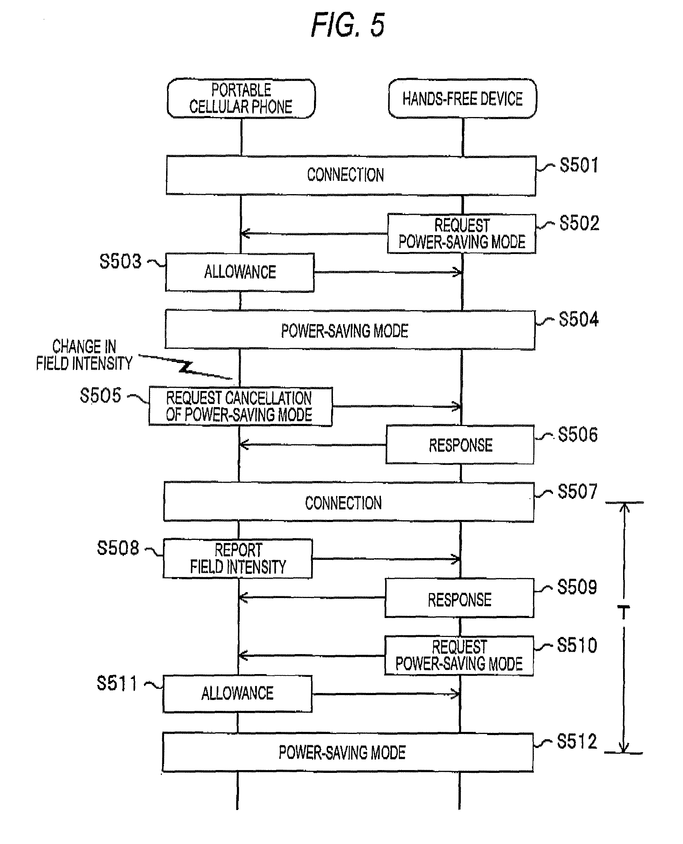

Fig. 5 is a sequence diagram describing operation procedures employed during the field intensity report function of the wireless communication system of the first embodiment of the present invention. As shown in Fig. 5, provided that a connection of short-range wireless communication is established between the portable cellular phone 1 and the hands-free device 2 (step S501); that the hands-free device 2 sends a request for a power-saving mode (step S502); and that the portable cellular phone 1 returns an allowance of the request for power-saving mode (step S503), the short-range wireless communication established between the portable cellular phone 1 and the hands-free device 2 enters a power-saving mode (step S504).

If a change arises in field intensity when the hands-free device 2 is compatible with the field intensity display function of the portable cellular phone 1; namely, when the portable cellular phone 1 must report field intensity to the hands-free device 2, a request for cancellation of a power-saving mode is transmitted to the hands-free device 2 as in step S405 shown in Fig. 4 (step S505). The hands-free device 2 returns a response for the request for cancellation of a power-saving mode (step S506), and the short-range wireless communication established between the portable cellular phone 1 and the hands-free device 2 enters a normal connection mode (step S507).

As in step S406 shown in Fig. 4, the portable cellular phone 1 reports field intensity to the hands-firee device 2 (step S508), and the hands-free device 2 returns an answer to the report to the portable cellular phone 1 (step S509). Subsequently, the hands-free device 2 transmits a request for a power-saving mode (step S510), and the portable cellular phone 1 returns an allowance of the power-saving mode request (step S511), whereupon the short-range wireless communication established between the portable cellular phone 1 and the hands-free device 2 enters a power-saving mode (step S512).

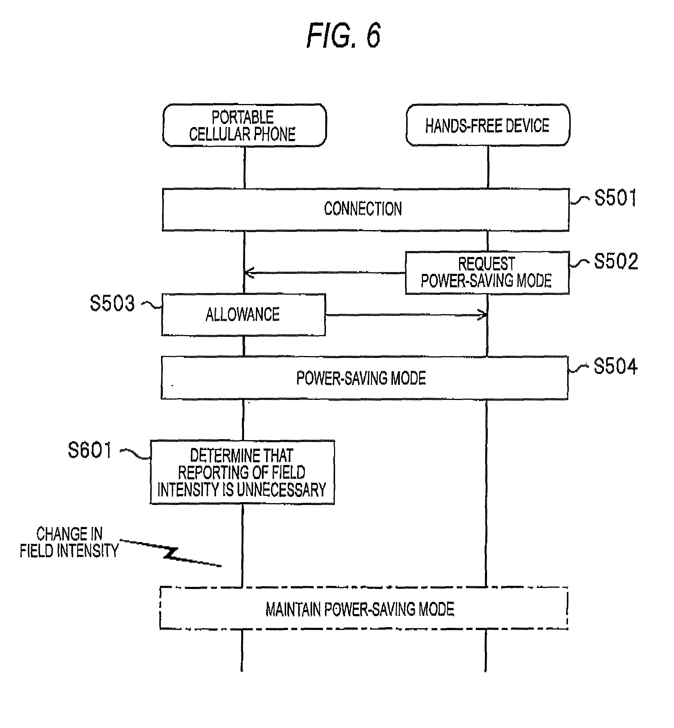

Operation of the wireless communication system performed when reporting of field intensity is not necessary will now be described. Fig. 6 is a sequence diagram for describing operation procedures adopted when the field intensity report function of the wireless communication system of the first embodiment of the present invention is deactivated. Sections that overlap with those shown in Fig. 5 are assigned the same reference numerals.

When a power-saving mode arises between the portable cellular phone 1 and the hands-free device 2 (step S504) and when the hands-free device 2 is not compatible with the field intensity display function of the portable cellular phone 1; namely, when the portable cellular phone 1 does not need to report field intensity to the hands-free device 2, the portable cellular phone 1 determines, by use of the device information stored in the storage section 122, that reporting of field intensity is unnecessary (step S601). When reporting of field intensity is determined to be unnecessary, reporting of field intensity to the hands-free device 2 still remains unnecessary even when a change arises in the field intensity of the signal received by the portable cellular phone 1 from the base station, and hence the power-saving mode is maintained.

Thus, when the hands-free device 2 connected by way of the short-range wireless communication section 13 is a device that does not require reporting of the intensity of a received signal, operation corresponding to a period T shown in Fig. 5 is suspended, and hence the power consumed by the portable cellular phone 1 and the hands-free device 2 can be reduced.

According to such a first embodiment of the present invention, it is determined whether or not the hands-free device 2 connected by way of the short-range wireless communication section 13 is a device that has previously been registered in the storage section 122 and that does not require reporting of field intensity. Hence, the function of reporting field intensity to a device that does not require reporting of field intensity can be reliably deactivated, whereupon the power consumed by the portable cellular phone 1 and the hands-free device 2 can be reduced.

In the present embodiment, the storage section 122 may store identification information about a device that requires reporting of field intensity and maintain a power-saving mode when a connected device is not a registered device.

### (Second Embodiment)

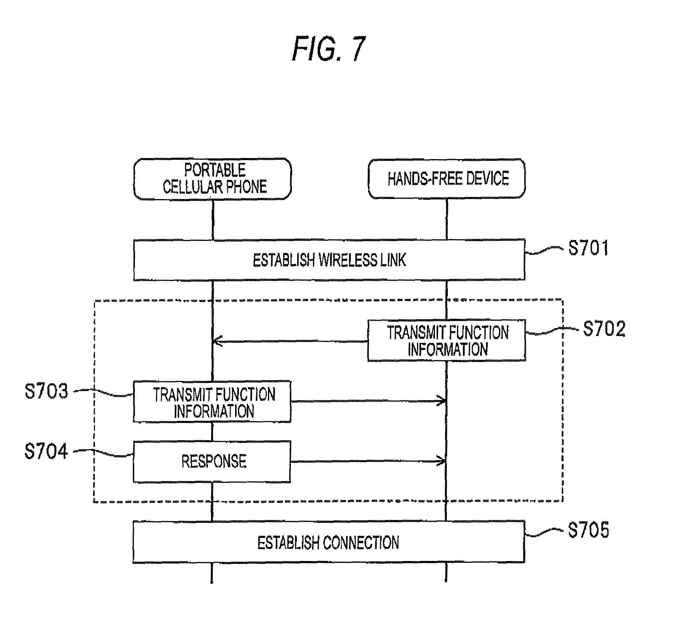

Fig. 7 is a sequence diagram for describing procedures of link establishment operation of a wireless communication system of a second embodiment of the present invention. The wireless communication system and a portable cellular phone of the second embodiment of the present invention have the same configurations as those shown in Figs. 1 and 2.

First, a wireless link is established between the portable cellular phone 1 and the hands-free device 2 (step S701). After establishment of the wireless link, the hands-free device 2 transmits function information about its compatible functions to the portable cellular phone 1, to thus report its own functions (step S702). The device information acquisition section 121 of the portable cellular phone 1 acquires the reported function information as device information and stores the thus-acquired information in the storage section 122.

The portable cellular phone 1 also transmits function information about its own compatible features to the hands-free device 2 (step S703). Subsequently, when a connection to the hands-free device 2 is allowed, a response for allowing a connection is transmitted to the hands-free device 2 (step S704). Thus, communication between the portable cellular phone 1 and the hands-free device 2 is established (step S705).

In the case of; for instance, Bluetooh (Registered Trademark), processing pertaining to steps S702 to S704 corresponds to HFP (Hands-free Profile) link establishment operation processing. Supported features can be reported to each other by mutually opening BRSFs [Bluetooth (Registered Trademark) Retrieve Supported Features]. Items of features that can be reported by the BRSFs include a call originator number report function. Therefore, the portable cellular phone 1 can ascertain whether or not the hands-free device 2 is compatible with the call originator number report function.

The hands-free device 2 compatible with a call originator number report function has at least a display function and hence can be estimated to have a chance of having a function of displaying the intensity of a received signal. Therefore, the portable cellular phone 1 of the present embodiment determines a necessity of reporting field intensity by utilization of the device information acquired through processing shown in Fig. 7.

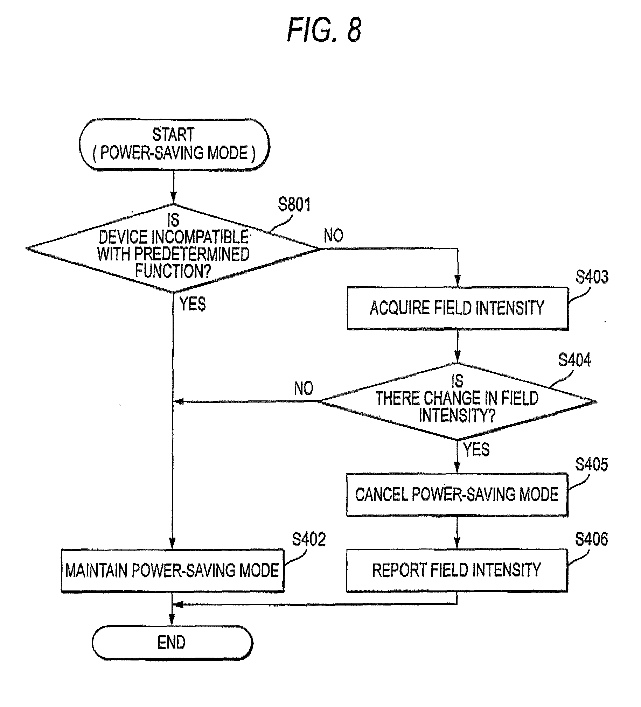

Fig. 8 is a flowchart showing processing procedures employed when the portable cellular phone of the second embodiment of the present invention reports field intensity. In Fig. 8, procedures overlapping those shown in Fig. 4 are assigned the same reference numerals.

As shown in Fig. 8, upon receipt of a report indicating initiation of a power-saving mode from the mode setting section 123, the field intensity report determination section 124 reads from the storage section 122 function information about the hands-free device 2 that is connected by way of the short-range wireless communication section 13 and that is in the power-saving mode and determines whether or not the hands-free device 2 is incompatible with a predetermined function (step S801). The predetermined function of the procedures is a function requiring at least a display function, such as the previously-described call originator number report function.

When the hands-free device is incompatible with the predetermined function (YES in step S801), the device is determined to be a device that does not require reporting of field intensity, and the power-saving mode is maintained (step S402). Specifically, the field intensity report function is deactivated.

In the meantime, when the device is compatible with the predetermined function (NO in step S801), the device can be estimated to be a device that does not require reporting of field intensity, and hence processing proceeds to step S403, where field intensity acquisition processing is performed. Processing pertaining to step S403 and subsequent steps is analogous to that described by reference to Fig. 4.

According to such a second embodiment of the present invention, it is estimated, from the function information acquired from the hands-free device 2, whether or not the hands-free device has a field intensity display function, and it is also determined whether or not a necessity of reporting field intensity is required. Therefore, the function for reporting field intensity to a device that does not require reporting of field intensity is deactivated, so that power consumption of the portable cellular phone 1 can be reduced.

In the foregoing first and second embodiments, it is determined whether or not reporting of field intensity by use identification information and function information about an external device is necessary. However, an external device may also transmit, to the portable cellular phone, information for commanding a necessity to report intensity of a received signal through use of a unique command interpretable for the portable cellular phone and the external device, and the portable cellular phone may acquire the command information, to thus determine the necessity of reporting field intensity. For instance, the portable cellular phone may also deactivate the field intensity report function only when received from the external device command information showing negation of the need to report field intensity.

The portable cellular phone 1 of the foregoing embodiment operates as an example wireless communication device. The wireless communication device is not limited to the portable cellular phone, so long as the device has two different wireless communication functions.

In the present embodiment, when a power-saving mode is initiated, a determination is made as to whether or not field intensity needs to be reported to an external device connected by short-range wireless communication, However, the determination may also be rendered in a normal power mode.

The present invention has been described in detail and by reference to specific embodiments. However, it is manifest to those skilled in the art that various modifications or alterations can be made to the embodiments without departing from the spirit and scope of the invention.

The present patent application is based on the Japanese Patent Application filed on February 28, 2006 (JP-A-2006-053130), contents of which are incorporated hereby for reference.

### Industrial Applicability

The wireless communication device of the present invention and the communication method thereof exhibit an effect of reducing power consumption and implementing a function of reporting the intensity of a received signal to an external device and are useful for a portable cellar phone capable of establishing short-range communication with a hands-free device, such as a vehicle-mounted device, and a headset.

## Claims

1. A wireless communication device, comprising:
a first wireless communication section;
a second wireless communication section that conducts wireless communication with an external device by use of a communication scheme differing from a communication scheme of the first wireless communication section;
a signal intensity detection section that detects intensity of a signal received by the first wireless communication section;
a signal intensity report section that reports information about the detected intensity of the received signal to the external device via the second wireless communication section;
a device information acquisition section that acquires device information about the external device from the external device connected by the second wireless communication section; and
a signal intensity report control section that determines, on the basis of the device information, whether or not it is necessary to report the information by the signal intensity report section and that, when reporting is determined to be unnecessary, deactivates a function of the signal intensity report section.

2. The wireless communication device according to claim 1, further comprising:
a storage section that stores identification information about a device that does not require reporting of the information about the intensity of the received signal,
wherein the device information acquisition section acquires the identification information about the external device from the external device; and
wherein the signal intensity report control section deactivates the function of the signal intensity report section when the identification information stored in the storage section is coincident with the acquired identification information.

3. The wireless communication device according to claim 1 or 2, wherein the device information acquisition section acquires, from the external device, function information on the external device; and
wherein the signal intensity report control section determines, depending on whether or not the acquired function information includes a predetermined function, whether or not it is necessary to report the information by the signal intensity report section.

4. The wireless communication device according to any one of claims 1 to 3, wherein the device information acquisition section acquires information for commanding whether or not reporting of the intensity of the received signal is required from the external device; and
wherein the signal intensity report control section determines, on the basis of the acquired command information, whether or not it is necessary to report the information by the signal intensity report section.

5. The wireless communication device according to any one of claims 1 to 4, wherein the signal intensity report section determines which one of a plurality of classified received signal intensity levels corresponds to the detected intensity of the received signal and, when it is determined that the received signal intensity level is changed, reports the determined level to the external device as the information about the detected intensity of the received signal.

6. The wireless communication device according to any one of claims 1 to 5, wherein the first wireless communication section is a mobile communication section which conducts communication with a base station for mobile communication; and
wherein the second wireless communication section is a short-range wireless communication section which conducts short-range wireless communication with the external device.

7. A wireless communication system, comprising:
the wireless communication device according to any one of claims 1 to 6; and
a short-range wireless communication device, as the external device, which conducts communication with the second wireless communication section of the wireless communication device.

8. A wireless communication method of a wireless communication device including a first wireless communication section, a second wireless communication section that conducts wireless communication with an external device by use of a communication scheme differing from a communication scheme of the first wireless communication section, a signal intensity detection section that detects intensity of a signal received by the first wireless communication section, and a signal intensity report section that reports information about the detected intensity of the received signal to the external device via the second wireless communication section, the wireless communication method comprising:
acquiring device information about the external device from the external device connected by the second wireless communication section; and
determining, on the basis of the device information, whether or not it is necessary to report the information by the signal intensity report section and deactivating a function of the signal intensity report section when the report is determined to be unnecessary.

9. A program for causing a computer to implement the communication method according to claim 8.
